# EUROPÄISCHE PATENTSCHRIFT

(11) **EP 3 449 299 B1**
(45) Veröffentlichungstag und Bekanntmachung des Hinweises auf die Patenterteilung: **07.09.2022**
(21) Anmeldenummer: 17717349.9
(22) Anmeldetag: 05.04.2017
(51) Int. Cl.: G02B 19/00, G02B 3/08

(54) **LEUCHTENOPTIK**
LIGHTING OPTICS
OPTIQUE D'ÉCLAIRAGE

(30) Priorität: 27.04.2016 DE 102016207143
(43) Veröffentlichungstag der Anmeldung: 06.03.2019
(73) Patentinhaber: Zumtobel Lighting GmbH, 6850 Dornbirn (AT)
(72) Erfinder: EBNER, Stephan, 6850 Dornbirn (AT)
(74) Vertreter: Kiwit, Benedikt
(86) Internationale Anmeldenummer: PCT/EP2017/058120
(87) Internationale Veröffentlichungsnummer: WO 2017/186465

(56) Entgegenhaltungen:
- CN-B- 101 709 833
- US-A1- 2010 014 286
- US-A1- 2014 126 234

## Beschreibung

Die folgende Erfindung betrifft eine Leuchtenoptik zur gerichteten Lichtabgabe mit veränderlicher Lichtabgabecharakteristik sowie ein Leuchtenoptiksystem aufweisend wenigstens zwei erfindungsgemäße Leuchtenoptiken und ferner eine Leuchte mit erfindungsgemäßer Leuchtenoptik oder erfindungsgemäßem Leuchtenoptiksystem.

Aus dem Stand der Technik sind unterschiedliche optische Elemente bekannt, um ein optisches System mit möglichst geringer Strahldivergenz, also einem möglichst kleinen Öffnungswinkel und geringem Streulichtanteil, bereitzustellen. Anwendungsbereiche sind beispielsweise Strahler, Spots, Fahrradleuchten, Scheinwerfer und dergleichen.

US 2010 / 0 014 286 A1 zeigt eine Lichtbestrahlungsvorrichtung, die die Erweiterung / Verengung eines Lichtbestrahlungsbereichs einstellen kann und nahezu das gesamte von einer einzelnen LED emittierte Licht zum Lichtbestrahlungsbereich leiten kann. Die Vorrichtung weist dazu eine LED, einen Stützkörper zum Halten der LED, eine optische Einheit je LED und einen Mechanismus zum Einstellen einer relativen Position der optischen Einheit zu der LED entlang der optischen Achse auf.

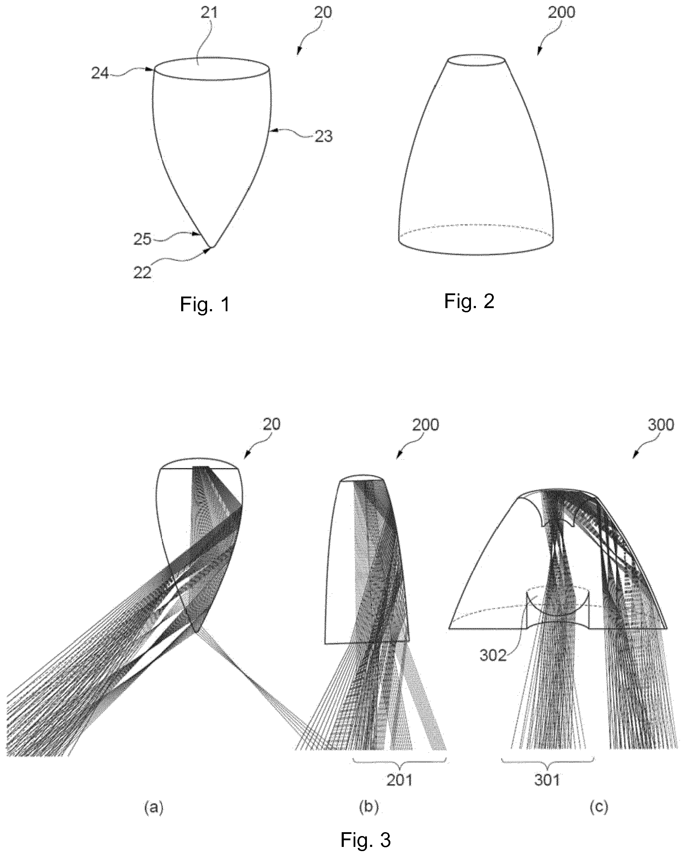

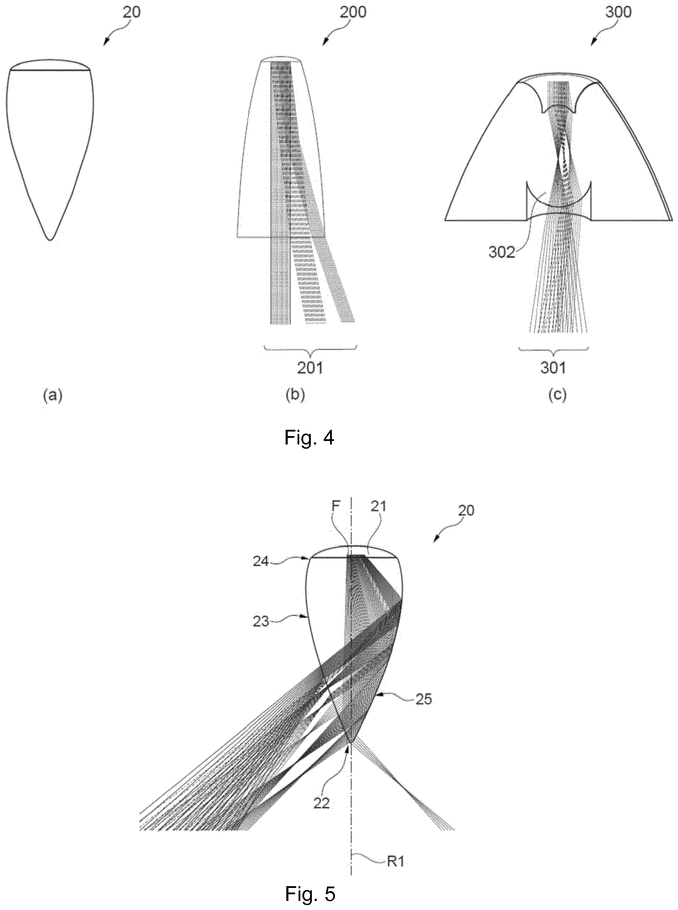

Es sind aus dem Stand der Technik unterschiedliche Vorsatzoptiken in verschiedenen Ausprägungen bekannt, wie beispielsweise Reflektoren oder TIR-Linsen 300 (vgl. Figuren 3c und 4c). Auch sind optische Systeme bekannt, in denen die optischen Komponenten in mehreren Stufen hintereinander angeordnet sind; vgl. hierzu beispielsweise die DE 10 2010 039 306 A1. Im Strahlerbereich werden neben Linsen für viele Anwendungen oft auch Blenden zur Streulichtreduktion als optische Komponenten eingesetzt. Letzeres beispielsweise im Bereich von Projektoren.

Eine spezielle Form der Lichtkonzentratoren ist beispielsweise auch aus dem Solarbereich bekannt. Dort werden sogenannte CPC-Konzentratoren (CPC = Compound Parabolic Concentrator) 200 eingesetzt. Ein solcher ist beispielhaft in Figur 2 gezeigt. Mit Verweis auf die Figuren 3b und 4b ist ersichtlich, dass diese Optik 200 einen unkontrollierten Direktlichtanteil 201 aufweist, was eine gerichtete Lichtabgabe erschwert und zu einer vergleichsweise hohen Strahldivergenz führt. Des Weiteren ergeben sich störende koronaartige Ringe bzw. Abbildung um den zentralen Spot(-bereich) herum. Ähnliche Effekte ergeben sich bei den zuvor beschriebenen TIR-Linsen 300 (vgl. Figuren 3c und 4c).

Ferner lässt sich zwar bei den vorbezeichneten Optiken auf Basis ihrer geometrischen Gestaltung und einer definierten Lichteinkopplung durch entsprechenden Einsatz und entsprechendes Platzierung von Leuchtmitteln eine definierte Lichtabgabecharakteristik fest einstellen. Allerdings lässt sich die so eingestellte Lichtabgabecharakteristik nicht ohne den Einsatz weiterer optischer Elemente ändern, um bspw. einen Zoomeffekt zu ermöglichen.

Es ist nunmehr eine Aufgabe der vorliegenden Erfindung, ein in seiner Lichtabgabecharakteristik variables optisches System mit besonders geringer Strahldivergenz bereitzustellen.

Diese Aufgabe wird durch den Gegenstand des unabhängigen Anspruchs gelöst. Die abhängigen Ansprüche bilden den zentralen Gedanken der Erfindung in besonders vorteilhafter Weise weiter. Gemäß einem ersten Aspekt betrifft die Erfindung eine Leuchtenoptik. Diese weist eine optische Achse auf. Ferner weist die Leuchtenoptik eine erste Optik und eine zweite Optik auf. Die erste Optik erstreckt sich von einem (flächigen) Bodenbereich bzw. Lichteintrittsbereich weg - vorzugsweise in Richtung der optischen Achse der Leuchtenoptik - und läuft zu einer Spitze hin zu. Bevorzugt weist die erste Optik dabei vom Lichteintrittsbereich zur Spitze hin verlaufend im Querschnitt eine parabelförmige oder kreisbogenförmige oder eine sonstige kurvenförmige Außenkontur auf. Besonders bevorzugt ist die erste Optik im Wesentlichen kegelförmig ausgebildet. Die den Lichteintrittsbereich mit der Spitze verbindenden Seitenflächen der ersten Optik sind - also dessen Außenkontur ist - bevorzugt rotationssymmetrisch ausgebildet, wobei die vorliegende Erfindung hierauf nicht beschränkt ist. Die zweite Optik weist wiederum eine Öffnung auf, in die die erste Optik wenigstens mit ihrer Spitze hineinragt. Die zweite Optik weitet sich von der ersten Optik weg - und bevorzugt in Richtung der optischen Achse der Leuchtenoptik - zu einem Lichtabgabebereich (der zweiten Optik bzw. der Leuchtenoptik) hin auf. Die zweite Optik ist ferner derart ausgebildet, um von der ersten Optik (bevorzugt in die bzw. der Öffnung) ausgekoppeltes Licht in der Öffnung der zweiten Optik einzukoppeln und über eine Umlenkfläche der zweiten Optik gerichtet über den Lichtabgabebereich aus der zweiten Optik abzugeben. Unter "Einkoppeln" wird gemäß der Erfindung verstanden, dass das Licht in die entsprechende Optik (hier die zweite Optik) eintritt bzw. in diese abgegeben wird. Dies umfasst einerseits die Einführung von Licht in eine Vollkörper-Optik, kann jedoch auch die Abgabe von Licht in eine hohle Optik (bspw. ein Reflektor) bedeuten. Die - folglich in Richtung der optischen Achse der Leuchtenoptik gesehen (optisch) hintereinander angeordnete - erste Optik und zweite Optik sind relativ zueinander entlang der optischen Achse beweglich ausgebildet bzw. angeordnet, um eine Lichtabgabecharakteristik der Leuchtenoptik zu ändern. Die Änderung der Lichtabgabecharakteristik kann dabei jegliche Änderung derselben einzeln und in Kombination umfassen. Insbesondere ist hier ein Zoomen (= Veränderung des Öffnungswinkels α der Abstrahlcharakteristik bzw. des ausgekoppelten Lichtbündels), also Aufweiten und Fokussieren, und/oder ein Verkippen und/oder eine Änderung einer Streuung und/oder Farbkonversion des über die Leuchtenoptik abgegebenen Lichts bzw. Strahlbündels zu nennen. Mit anderen Worten sind die vorbezeichneten Optiken derart relativ zueinander bewegbar, dass mittels einer Bewegung der Optiken relativ zueinander die Abstrahlcharakteristik der Leuchtenoptik eingestellt werden kann; beispielsweise durch vorbezeichnete Verkippung der Hauptabstrahlrichtung und/oder Veränderung (Aufweitung/Fokussierung) des Öffnungswinkels des abgegebenen Strahlbündels und dergleichen.

Bei der ersten Optik handelt es sich folglich um eine Art asphärischen Strahlteiler, dessen Oberfläche bevorzugt durch einen um die zentrale Achse rotierenden geneigten Kegelschnitt beschrieben werden kann; alternativ sind auch kreisbogenform oder beliebige Spline-Geometrien denkbar. Im Gegensatz zu den bekannten CPC-Konzentratoren ist bei der hier beschriebenen ersten Optik der Kegelschnitt, wie in Figur 1 zu sehen, zur Rotationsachse bzw. optischen Achse hin nach unten geneigt, so dass die Rotationsfläche idealerweise spitz zuläuft. Auf diese Weise kann bevorzugt alles in die erste Optik (über den Lichteintrittsbereich) eingekoppelte Licht an der den Lichteintrittsbereich mit der Spitze verbindenden Seitenfläche der ersten Optik umgelenkt werden; bevorzugt durch Totalreflektion an dieser Seitenfläche. Dieses umgelenkte Licht wird dann an den Gegenflächen - also an der jeweils gegenüberliegenden Seite über die Seitenfläche der ersten Optik - insbesondere im Bereich von dessen Spitze - aus der ersten Optik ausgekoppelt und steht zur Einkopplung in die zweite Optik bereit, so dass ein direkter Lichtanteil - sprich ein Anteil von Licht, der nicht von der in Figur 1 gezeigten Kegelschnittfläche umgelenkt wird, sondern direkt vorne wieder austritt - vermieden wird (vgl. Figur 3a und insbesondere Figur 4a). In der zweiten Optik kann dann das gesamte Licht in gewünschter Weise zur gerichteten Lichtabgabe beeinflusst bzw. umgelenkt werden.

Auch eine bei klassischen TIR-Vorsatzlinsen 300 übliche Mittellinse 302, wie beispielsweise in den Figuren 3c und 4c gezeigt, entfällt, wodurch mögliche koronaartige Erscheinungen deutlich kontrollierbarer werden und bestenfalls sogar eliminiert werden können. In den Figuren 3c und 4c sind hierzu auch die Strahlengänge einer TIR-Linse 300 dargestellt, wobei in Figur 4c gezeigt ist, dass insbesondere bei verhältnismäßig großer Lichtquelle zur Optik das über die Mittellinse geführte (Direkt-)Licht 301 in problematischer Weise unkontrollierbar austreten kann und somit eine gerichtete Lichtabgabe erschwert ist.

Durch die relative Bewegung der so gebildeten und angeordneten ersten und zweiten Optik zueinander wird es ermöglicht, den Strahlengang des Lichtes an bzw. über unterschiedliche Bereiche der Optiken - insbesondere der zweiten Optik -zu führen, so dass hierdurch die Lichtcharakteristik auf unterschiedliche Weise variiert werden kann.

Die erste Optik ist bevorzugt als Vollkörper gebildet und stellt, wie bereits zuvor beschrieben, insbesondere einen Strahlteiler dar. Die entsprechende Lichtlenkung der ersten Optik ist beispielhaft in Figur 3a gezeigt.

Der Lichteintrittsbereich der ersten Optik dient dem Einkoppeln von Licht in die erste Optik bzw. in die Leuchtenoptik oder das im weiteren noch beschriebene Leuchtensystem.

Der Fokuspunkt der totalreflektierenden Seitenflächen liegt bevorzugt im Zentrum des Lichteintrittsbereichs. Dabei liegt der Fokuspunkt der totalreflektierenden Seitenflächen bevorzugt innerhalb der ersten Optik oder auch außerhalb der ersten Optik. Besonders bevorzugt liegt der Fokuspunkt auf einer Rotationssymmetrieachse der ersten Optik bzw. auf der optischen Achse. Es ist jedoch auch denkbar, dass er abseits der vorbezeichneten Achsen liegt. Die Lichtaufteilung durch die erste Optik funktioniert dann besonders gut, wenn der Fokuspunkt der totalreflektierenden Seitenflächen im Zentrum der Lichteintrittsfläche liegt. Bei entsprechenden parabolischen Außen- bzw. Seitenflächen kann dabei eine besonders hohe Divergenz des Strahlteilers (= erste Optik) erreicht werden. Es ist jedoch auch denkbar, plane Seitenflächen bereitzustellen. Wie gerade erwähnt, kann die erste Optik vom Lichteintrittsbereich zur Spitze hin verlaufend eine parabelförmige oder aber auch eine kreisbogenförmige oder eine sonstige kurvenförmige Außenkontur aufweisen. Je nach Außenkontur, die beispielsweise auch plan (also insgesamt kegelförmig) sein kann, kann die Divergenz der ersten Optik variiert werden.

Die den Lichteintrittsbereich mit der Spitze verbindende Seitenfläche der ersten Optik kann sich in einem Bereich nahe des Lichteintrittsbereichs von dem Lichteintrittsbereich zur Spitze hin aufweitend oder zylindrisch erstrecken. Auf diese Weise wird es ermöglicht, die erste Optik aus herstellungstechnischen Gründen einfach entformbar bereitzustellen. In einer bevorzugten Ausgestaltungsform bildet dann der sich aufweitende oder zylindrisch erstreckende Bereich einen für die Lichtlenkung bzw. optisch nicht-wirksamen Bereich. Das Licht ist dann in der Weise in die erste Optik einzukoppeln, dass möglichst kein Licht(-anteil) auf diesen nicht-wirksamen optischen Bereich fällt. Dies kann beispielsweise durch eine definierte Anordnung der Lichtquelle bzw. des Leuchtmittels geschehen, wie im Weiteren noch beschrieben wird.

Zwischen der Spitze der ersten Optik und dem die Öffnung begrenzenden Bereich der zweiten Optik ist bevorzugt ein Abstand bereitgestellt. Das Licht tritt also aus der ersten Optik aus und wird dann durch die Öffnung auf die zweite Optik geführt, wo es entsprechend eingekoppelt wird. Somit tritt das durch die erste Optik optimal bzw. definiert geteilte Licht in die zweite Optik der Leuchtenoptik ein, um dort für eine gerichtete Lichtabgabe bereitgestellt und umgelenkt zu werden. Da kein direkter Lichtanteil vorliegt, kann folglich bevorzugt das gesamte in die Leuchtenoptik eingekoppelte Licht entsprechend gerichtet umgelenkt werden und somit eine besonders geringe Strahldivergenz erzielt werden. Durch relative Bewegung der beiden Optiken zueinander und entlang der optischen Achse kann der vorbezeichnete Abstand und somit auch die Lichtführung und letztlich damit die Lichtabgabecharakteristik variiert werden.

Die zweite Stufe der Leuchtenoptik, also die zweite Optik, ist nun vorgesehen, um das durch den Strahlteiler aufgefächerte' Licht in die gewünschte Richtung umzulenken. Als zweite Stufe eignen sich im einfachsten Fall klassische Reflektoren, um das von der ersten Optik ausgekoppelte Licht gerichtet umzulenken. Auch sind beispielsweise bei anspruchsvolleren Aufgaben TIR-Optiken oder auch andere Optiken denkbar.

Die zweite Optik kann folglich auch als Vollkörper ausgebildet sein, wobei dieser Vollkörper mit einem Reflektor entsprechend verbunden werden kann, um in Kombination miteinander für die Umlenkung des in die zweite Optik eingekoppelten Lichts bereitzustehen.

Wie bereits erwähnt, ist die zweite Optik derart ausgebildet, um von der ersten Optik ausgekoppeltes Licht in der Öffnung einzukoppeln. Grundsätzlich ist eine Einkopplung eines Teils des Lichtes auch außerhalb der Öffnung denkbar, allerdings wird bei entsprechender Einkopplung allen Lichts über die Öffnung eine besonders effiziente Lichtausbeute erzielt.

Die zweite Optik ist bevorzugt derart ausgebildet, um das Licht mittels Reflexion oder Totalreflexion zur gerichteten Lichtabgabe aus der zweiten Optik umzulenken. Hierzu dient die Umlenkfläche der zweiten Optik. Eine Reflexion liegt insbesondere bei Verwendung eines normalen Reflektors vor. Die Umlenkfläche ist dann in der Regel durch die reflektierend ausgebildete Innenfläche bzw. Innenwand des Reflektors gebildet. Bei der Verwendung von entsprechenden Optiken, wie sie im Weiteren noch beschrieben werden (beispielsweise TIR-Optiken), ist auch eine Lichtumlenkung mittels Totalreflexion denkbar und sogar bevorzugt wünschenswert. Die Umlenkfläche ist dann durch die äußere Seitenfläche bzw. Kontur der in der Regel als Vollkörper ausgebildeten zweiten Optik gebildet.

In einer bevorzugten Ausgestaltungsform bildet der Lichtabgabebereich gleichzeitig die Auskoppelfläche der Leuchtenoptik. Somit kann eine möglichst kompakte Bauform erzielt werden.

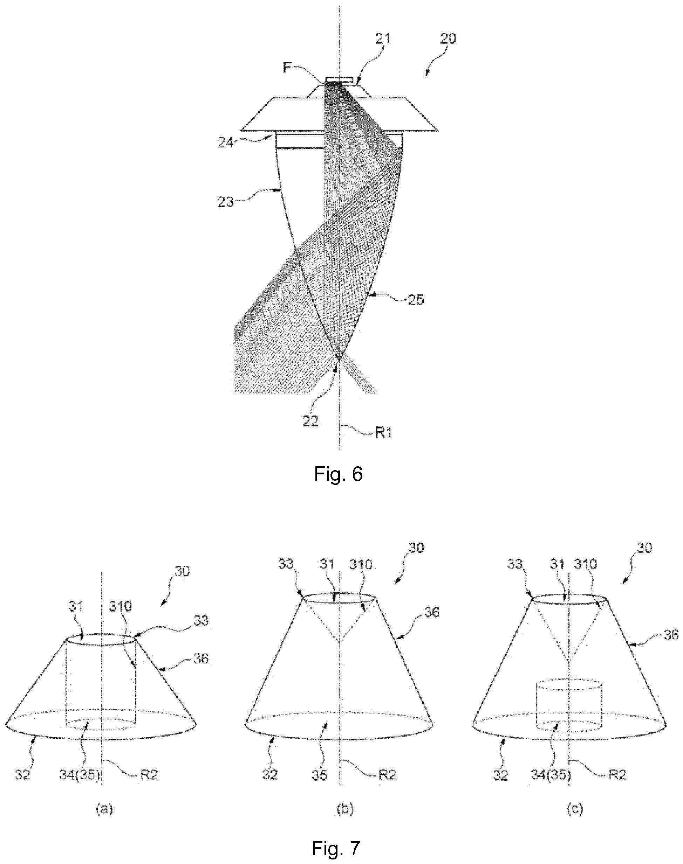

Die zweite Optik weist, wie zuvor beschrieben, eine sich von der ersten Optik bzw. einer die erste Optik aufnehmenden Öffnung aufweisenden Seite von der ersten Optik weg erstreckende und in Richtung der optischen Achse zu dem Lichtabgabebereich hin aufweitende Form auf. Eine solche Form ist beispielsweise in Figur 6 gezeigt. Die zweite Optik bildet dann bevorzugt im Wesentlichen eine zu der ersten Optik umgekehrte kegelstumpfförmige Form, welche bevorzugt in ihrer der ersten Optik abgewandten Seite den Lichtabgabebereich aufweist, der zu der ersten Optik hin zu einem flächigen Stirnbereich zuläuft. "Flächig" bedeutet im Rahmen der Erfindung in der Regel, dass sich an einer entsprechenden Seite eine entsprechende geometrische Fläche wenigstens zwischen den begrenzenden Randbereichen derselben aufspannen lässt, auch wenn die besagte Seite eine Öffnung oder dergleichen aufweist.

Der Stirnbereich kann dabei die die erste Optik wenigstens teilweise aufnehmende Öffnung aufweisen. Die zweite Optik weist bevorzugt einen die Öffnung begrenzenden Lichteinkoppelbereich auf, über welchen von der ersten Optik ausgekoppeltes Licht in die zweite Optik eingekoppelt wird. Die Öffnung bzw. deren Lichteinkoppelbereich kann vorzugsweise zum Lichtabgabebereich hin zulaufen (bspw. kegelförmig oder konisch) oder zylindrisch ausgebildet sein. Auch andere Ausgestaltungsformen (parabelförmig oder kreisbogenförmig und dergleichen) sind denkbar. Die Öffnung kann gemäß einer Ausführungsform vorzugsweise durchgehend durch die zweite Optik ausgebildet sein; also als Durchgangsöffnung mit beliebig definierter und wenigstens teilweise Lichteinkoppelbereich-bildender Kontur.

Der Lichtabgabebereich der zweiten Optik kann ferner eine Ausnehmung, vorzugsweise eine zentrale Ausnehmung, aufweisen, welche besonders bevorzugt in einem für die Lichtabgabe nicht-wirksamen Bereich vorgesehen ist. Diese Aussparung auf der Lichtaustrittsseite der Leuchtenoptik bzw. zweiten Optik dient bevorzugt einer Volumenoptimierung, so dass die Optik besser mit einem Spritzgussverfahren hergestellt werden kann und letztlich Herstellungskosten eingespart und Gewicht reduziert werden kann. Die Ausnehmung ist besonders bevorzugt integral mit der Öffnung ausgebildet uns stellt somit die vorbezeichnete Durchgangsöffnung dar. Die Geometrie der zweiten Optik kann jedoch auch zu einer erneuten internen Totalreflexion genutzt werden. Der zweiten Optik kann auch bzw. hierfür eine weitere Optik nachgeschaltet werden. Vorrangig dient sie jedoch der Auskoppelung aus der Leuchtenoptik.

Die Öffnung bzw. der die Öffnung begrenzende Lichteinkoppelbereich der zweiten Optik ist bevorzugt in Richtung der optischen Achse gesehen größer ausgebildet ist, als der Auskoppelbereich der ersten Optik und insbesondere als ein von der ersten Optik ausgekoppeltes und auf den Lichteinkoppelbereich auftreffendes Strahlbündel. Besonders bevorzugt ist die Öffnung bzw. der die Öffnung begrenzende Lichteinkoppelbereich der zweiten Optik wenigstens anderthalb mal so groß, besonders bevorzugt wenigstens doppelt so groß ausgebildet. Auf diese Weise kann sichergestellt werden, dass auch bei relativ zueinander bewegten Optiken das gesamte Licht von der ersten Optik in die zweite Optik gelangt, um von dieser ausgekoppelt zu werden. Somit kann insbesondere Streulicht vermieden und die Effektivität der Leuchtenoptik maximiert werden.

Die Umlenkfläche ist bevorzugt eine die zweite Optik bzgl. der optischen Achse seitlich außen begrenzende Fläche, um das in die zweite Optik eingekoppelte Licht optisch zu beeinflussen und insbesondere zum Lichtabgabebereich hin umzulenken. Die zweite Optik kann somit sehr kompakt und zugleich effektiv ausgebildet werden.

Vorzugsweise weist/weisen die Öffnung bzw. der diese begrenzende Lichteinkoppelbereich und/oder die Umlenkfläche und/oder der Lichtauskoppelbereich eine strukturierte und/oder konturierte Oberfläche zur Beeinflussung des Lichts aufweist. Dies ermöglicht eine definierte Lichtbeeinflussung über möglichst den gesamten Bewegungsbereich der Optiken.

Der Lichteinkoppelbereich (bzw. die Öffnung) läuft bevorzugt in Richtung der optischen Achse gesehen nicht konstant, beispielsweise parabelförmig oder diskontinuierlich, zu. In gleicher Weise kann sich zusätzlich oder alternativ die Umlenkfläche in Richtung der optischen Achse gesehen nicht konstant, beispielsweise parabelförmig oder diskontinuierlich, aufweiten. Somit wird eine definierte und veränderliche optische Beeinflussung des Lichtes - also Änderung der Lichtabgabecharakteristik - über den gesamten Bewegungsbereich der zwei Optiken bereitgestellt.

Der Lichtabgabebereich kann sich wenigstens teilweise in einer Ebene, vorzugsweise senkrecht zur optischen Achse, erstreckt. Alternativ oder zusätzlich kann der Lichtabgabebereich wenigstens teilweise bezüglich der Ebene geneigt sein. Alternativ oder zusätzlich kann der Lichtabgabebereich wenigstens teilweise kontinuierlich bzw. diskontinuierlich zur optischen Achse und vorzugsweise auch zur ersten Optik hin zulaufen. Auf diese Weise werden ebenso über den Lichtabgabebereich Bereiche unterschiedlicher optischer Beeinflussung bereitgestellt, um je nach relativer Position der Optiken zueinander eine andere Lichtabgabecharakteristik zu ermöglichen.

Der Lichteinkoppelbereich bzw. die diesen aufweisende Öffnung und/oder die Umlenkfläche und/oder der Lichtabgabebereich können kontinuierlich oder stufenweise ineinander übergehende Bereiche unterschiedlicher optischer Beeinflussung aufweisen. Somit kann je nach relativer Position der Optiken zueinander die Lichtabgabecharakteristik geändert werden. Zudem kann, wenn die Bereiche unterschiedlicher optischer Beeinflussung sich in Umfangsrichtung um die optische Achse vorgesehen sind, zudem eine definiert asymmetrische Lichtabgabe ermöglicht werden.

Gemäß einem weiteren Aspekt betrifft die Erfindung auch ein Leuchtenoptiksystem, welches wenigstens zwei erfindungsgemäße Leuchtenoptiken mit einer ersten Gruppe von ersten Optiken und einer zweiten Gruppe von zweiten Optiken aufweist. Die Gruppen von ersten Optiken und die Gruppen von zweiten Optiken sind relativ zueinander entlang der jeweiligen optischen Achsen - vorzugsweise von jeweils einem Paar von erster und zweiter Optik - beweglich ausgebildet, um eine Lichtabgabecharakteristik des Leuchtenoptiksystems zu ändern. Das einfache System mit jeweils einer ersten und einer zweiten Optik kann somit auch auf ein mehrere Leuchtenoptiken umfassendes System für einer gewünschten Lichtabgabe erweitert werden.

Die ersten Optiken der ersten Gruppe und/oder die zweiten Optiken der zweiten Gruppe können jeweils mittels Verbindungselmenten miteinander verbunden sein. Die beiden Gruppen können somit in einfacher Weise bereitgestellt und in einer gewünschten definierten Weise relativ zueinander bewegt werden, um das einstellbare Leuchtenoptiksystem zu bilden.

Insbesondere können die optischen Achsen der Leuchtenoptiken parallel zueinander ausgerichtet sein, um eine gleichartige Änderung der Lichtabgabecharakteristik der jeweiligen Leuchtenoptiken zu bewirken.

Die Verbindungselemente können ferner Führungselemente aufweisen, um mehrere Verbindungselemente geführt relativ zueinander zu bewegen. Dies insbesondere in der Art, dass eine definierte Bewegung der ersten (Gruppe von) Optiken mit der zweiten (Gruppe von Optiken) Optiken zur gewünschten gezielt veränderlichen, gerichteten Lichtabgabe bereitgestellt werden.

Es ist hierbei besonders bevorzugt denkbar, dass die Verbindungselemente und wahlweise auch die Führungselemente mit den jeweiligen (Gruppen von) Optiken integral ausgebildet sind.

Gemäß einem weiteren Aspekt betrifft die Erfindung ferner eine Leuchte, welche eine Leuchtenoptik bzw. ein Leuchtenoptiksystem gemäß der vorliegenden Erfindung aufweist. Ferner weist eine entsprechende Leuchte wenigstens ein Leuchtmittel zur Einkopplung von Licht in die erste(n) Optik(en) bzw. die Leuchtenoptik bzw. das Leuchtenoptiksystem auf. Das Leuchtmittel ist bevorzugt eine LED oder OLED.

Das Leuchtmittel kann bevorzugt von der ersten Optik, insbesondere dem Lichteintrittsbereich der ersten Optik, beabstandet vorgesehen sein. Auf diese Weise kann, beispielsweise wenn sich ein Luftspalt zwischen Leuchtmittel und erster Optik befindet, bereits beim Austritt des Lichts aus dem Leuchtmittel die erste Brechung des Lichts stattfinden, um somit das Licht gerade nicht auf dem für die Optik unwirksamen Bereich im Bereich des Fußes bzw. des Bodens des Strahlteilers/Kegels zu lenken. Somit kann das Licht gezielt auf den wirksamen Bereich an den vorbenannten Seitenflächen der ersten Optik gerichtet werden, an dem dann bevorzugt alles Licht, welches von dem Leuchtmittel abgegeben wird, totalreflektiert werden kann, wie dies zuvor bereits beschrieben wurde.

Weitere Vorteile, Ausgestaltungsformen und Ausführungsbeispiele werden im Folgenden anhand der Figuren der begleitenden Zeichnungen beschrieben. Es zeigen:
- Figur 1: eine erste Optik gemäß einem ersten Ausführungsbeispiel der vorliegenden Erfindung,
- Figur 2: einen CPC-Konzentrator gemäß dem Stand der Technik,
- Figur 3: die Lichtlenkung der optischen Systeme gemäß einer ersten Optik gemäß einem zweiten Ausführungsbeispiel der Erfindung (Figur 3a), eines bekannten CPC-Konzentrators (Figur 3b) und einer bekannten TIR-Linse (Figur 3c),
- Figur 4: die Lichtlenkung unkontrollierten Lichts der optischen Systeme gemäß der ersten Optik aus Figur 3a (Figur 4a), des bekannten CPC-Konzentrators aus Figur 3b (Figur 4b) sowie der bekannten TIR-Linse aus Figur 3c (Figur 4c),
- Figur 5: die erfindungsgemäße erste Optik gemäß Figur 3a mit Leuchtmittel im dargestellten Fokuspunkt und die zugehörige Lichtlenkung,
- Figur 6: eine erste Optik gemäß einem zweiten Ausführungsbeispiel der Erfindung mit Leuchtmittel im dargestellten Fokuspunkt und die zugehörige Lichtlenkung,
- Figur 7: drei Ausführungsformen einer erfindungsgemäßen zweiten Optik,
- Figur 8: eine erfindungsgemäße Leuchte mit erfindungsgemäßer Leuchtenoptik mit erster Optik gemäß Figur 6 und zweiter Optik gemäß einer vierten Ausführungsform der Erfindung,
- Figur 9: eine erfindungsgemäße Leuchte mit erfindungsgemäßer Leuchtenoptik mit erster Optik gemäß Figur 6 und zweiter Optik gemäß einer fünften Ausführungsform der Erfindung in zwei relativen Positionen zueinander zur Erzielung unterschiedlicher Abstrahlcharakteristik (Verkippen der Hauptabstrahlrichtung),
- Figur 10: eine erfindungsgemäße Leuchte mit erfindungsgemäßer Leuchtenoptik mit erster Optik gemäß Figur 6 und zweiter Optik gemäß einer sechsten Ausführungsform der Erfindung in zwei relativen Positionen zueinander zur Erzielung unterschiedlicher Abstrahlcharakteristiken (Aufweisten/Fokussieren des Strahlbündels), und
- Figur 11: ein Leuchtenoptiksystem gemäß einem Ausführungsbeispiel der vorliegenden Erfindung.

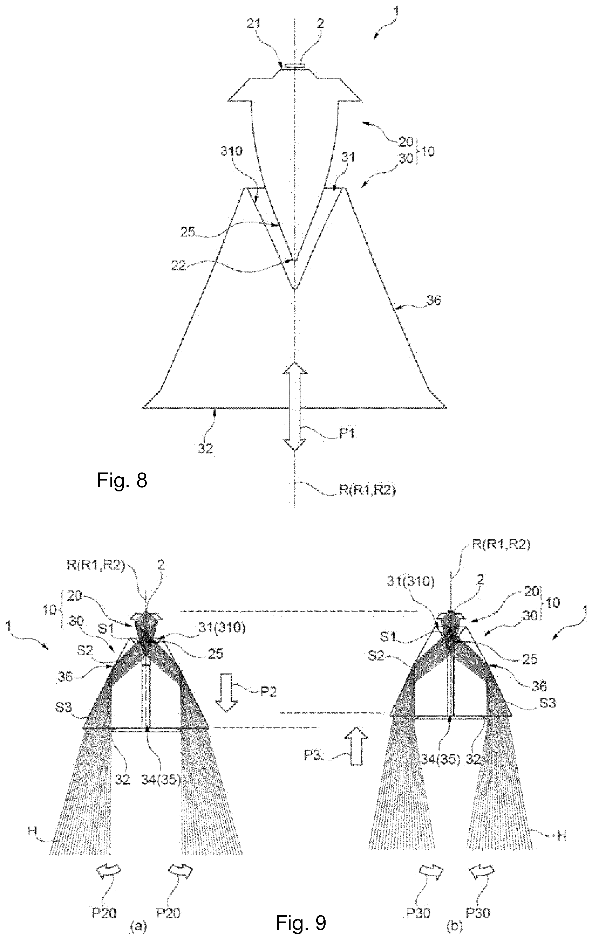

Figuren 8 bis 10 zeigen unterschiedliche Ausführungsbeispiele einer Leuchte 1 gemäß der vorliegenden Erfindung. Die Leuchte 1 weist dabei eine Leuchtenoptik 10 gemäß der vorliegenden Erfindung auf. Ferner weist die erfindungsgemäße Leuchte 1 ein Leuchtmittel 2 zur Einkopplung von Licht in die Leuchtenoptik 10 auf. Das Leuchtmittel 2 kann dabei bevorzugt eine LED oder eine OLED sein, wobei die Erfindung hierauf nicht beschränkt ist.

Die Leuchtenoptik 10 weist eine erste Optik 20 sowie eine zweite Optik 30 auf, welche im Weiteren näher beschrieben werden.

Die erste Optik 20 ist beispielsweise auch in Figuren 1, 5 und 6 in unterschiedlichen Ausführungsformen dargestellt. Die erste Optik 20 läuft von einem flächigen Lichteintrittsbereich 21 weg erstreckend zu einer Spitze 22 hin zu; dies bevorzugt in Richtung einer optischen Achse R der Leuchtenoptik, wie sie bspw. in Figur 8 dargestellt ist. Die erste Optik 20 weist ferner den Lichteintrittsbereich 21 mit der Spitze 22 verbindende Seitenfläche 23 auf. Wie Figuren 1,5 und 6 zu entnehmen ist, ist die Seitenfläche 23 bevorzugt rotationssymmetrisch ausgebildet. Wie dargestellt, weist die erste Optik 20 dazu eine im Wesentlichen kegelförmige Form auf. Auch andere Formen sind denkbar, beispielsweise lineare, rechteckige, quadratische oder mehreckige Formen, wobei die rotationssymmetrische Form zur Erzielung einer besonders geringen Strahldivergenz der Leuchtenoptik 10 bevorzugt ist.

Die erste Optik 20 kann bevorzugt vom Lichteintrittsbereich 21 zur Spitze 22 hin verlaufend im Querschnitt eine parabelförmige oder kreisbogenförmige oder sonstige kurvenförmige Außenkontur aufweisen; also eine im Wesentliche konvexe Außenkontur. Dargestellt ist eine parabelförmige Außenkontur. Diese beschreibt letztlich auch die den Lichteintrittsbereich 21 mit der Spitze 22 verbindende Seitenfläche 23.

Die erste Optik 20 ist bevorzugt als Vollkörper ausgebildet. Sie bildet idealerweise einen Strahlteiler, mit dem bevorzugt alles Licht, welches in die Leuchtenoptik 10 eingekoppelt wird, entsprechend teilt bzw. ,auffächert', so dass bevorzugt kein Direktlicht die erste Optik 20 durchläuft und dann direkt die Leuchtenoptik 10 verlässt.

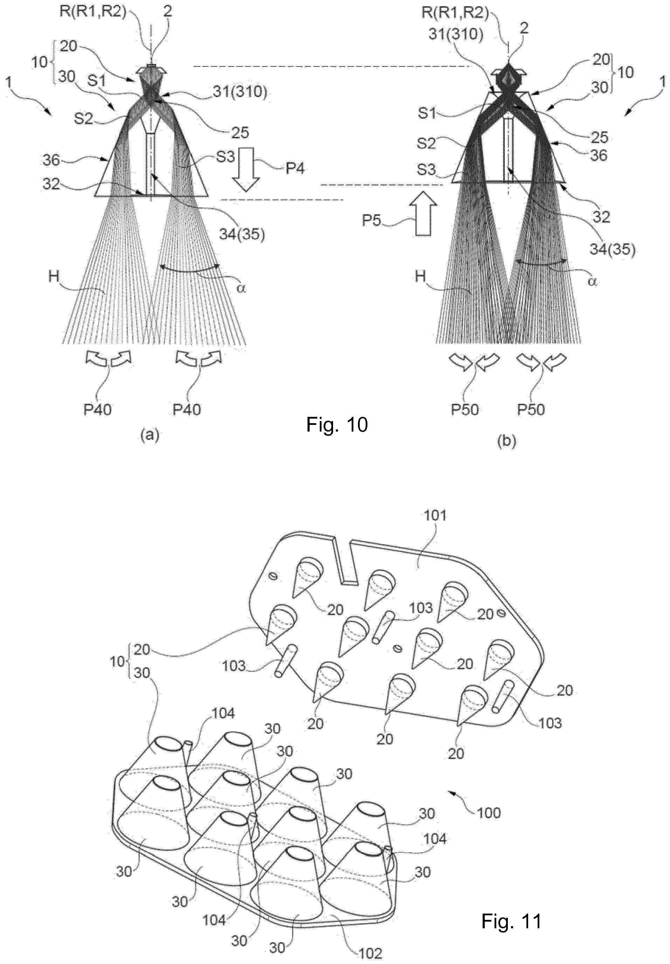

Der Lichteintrittsbereich 21 der ersten Optik 20 dient bevorzugt dem Einkoppeln von Licht in das Leuchtensystem bzw. die Leuchtenoptik 10. Die Seitenfläche 23 ist bevorzugt derart ausgebildet, dass vorzugsweise alles über den Lichteintrittsbereich 21 der ersten Optik 20 in diese eingekoppelte Licht an der Seitenfläche 23 totalreflektiert wird. Dies bevorzugt derart, dass das totalreflektierte Licht an der jeweils gegenüberliegenden Seite 23 über die Seitenfläche 23 der ersten Optik 20 aus dieser ausgekoppelt wird; insbesondere im Bereich der Spitze 22 der ersten Optik 20. Dies ist besonders bevorzugt in den Figuren 5 und 6 dargestellt und ergibt sich auch aus den Figuren 9 und 10. Wie Figuren 5 und 6 zu entnehmen ist, liegt der Fokuspunkt F der totalreflektierenden Seitenfläche 23 bevorzugt im Zentrum des Lichteintrittsbereichs 21; besonders bevorzugt zum vorbeschriebenen Einkoppeln von Licht in das Leuchtensystem. Dies bevorzugt in Kombination mit einer parabolischen Außenkontur der Seitenfläche 23 führt zu einer besonders effektiven Strahlteilung des gesamten in die erste Optik 20 eingekoppelten Lichts, wie dies in Figuren 5 und 6 vereinfacht für den rechten Lichtanteil dargestellt ist. Der Fokuspunkt F der totalreflektierenden Seitenfläche 23 kann innerhalb oder auch außerhalb der ersten Optik 20 liegen. Dabei kann er ferner, wie beispielsweise in Figuren 5 und 6 gezeigt, auf einer optischen Achse (hier gleichfalls Längsachse, Mittelachse bzw. Rotationssymmetrieachse) R1 der ersten Optik 20 bzw. R der Leuchtenoptik 10 oder auch abseits dieser Achse R1 liegen. Dies kann je nach gewünschter Lichtabgabe variiert werden.

Das Leuchtmittel 2 kann gemäß einer besonders bevorzugten Ausgestaltungsform von der ersten Optik 20 beabstandet vorgesehen sein; insbesondere von dem Lichteintrittsbereich 21 der ersten Optik 20. Dies ist insbesondere deswegen vorteilhaft, da auf diese Weise bereits eine erste Lichtbrechung des Lichts nach Austritt aus dem Leuchtmittel 2 geschieht, um somit das Licht bereits vor dem Einkoppeln in die Leuchtenoptik 10 definiert zu brechen. Dies ist insbesondere dann von Vorteil, wenn die den Lichteintrittsbereich 21 mit der Spitze 22 verbindende Seitenfläche 23 der ersten Optik 20 sich in einem Bereich 24 nahe dem Lichteintrittsbereich 21 von dem Lichteintrittsbereich 21 zur Spitze 22 hin aufweitend oder zylindrisch erstreckt. Dies ist beispielhaft den Figuren 1 und 5 zu entnehmen. Eine solche Ausgestaltung im Fußbereich der hier dargestellt kegelförmigen ersten Optik 20 ist insbesondere aus verfahrenstechnischen Gründen bereitgestellt, um eine einfache Entformung der Optik 20 bei deren Herstellung zu ermöglichen. Dieser Bereich 24 stellt bevorzugt einen optisch nicht-wirksamen Bereich dar, welcher aufgrund seiner geometrischen Ausgestaltung für eine gewünschte definierte Lichtlenkung nicht geeignet ist und somit möglichst vermieden werden sollte. Insofern bietet sich eine Lichtlenkung an, welche das Licht gezielt von diesen Bereichen 24 fernhält. Insofern ist eine Beabstandung eines Leuchtmittels 2 von der ersten Optik 20 mit bevorzugt dazwischenliegendem Luftspalt denkbar, um eine entsprechende Brechung des von dem Leuchtmittel 2 ausgehenden Lichtes zu erzielen, um somit eben den nicht-wirksamen optischen Bereich 24 in der Strahlführung zu vermeiden. Diese bevorzugte Strahlführung ist den Figuren 3a und 5 deutlich zu entnehmen. Der optisch nicht-wirksame Bereich 24 kann auch anders und insbesondere mit definierter Kontur ausgebildet sein, wie in den Ausführungsformen der Figuren 6 und 8 bis 10 dargestellt ist. Mittels entsprechend gewählter Kontur 24 kann das Handling bzw. eine Fixierung der zweiten Optik 20 in gewünschter Weise vereinfacht werden.

Wieder zurückkommend zu Figuren 8 bis 10 weist die dargestellte Leuchte 1 bzw. die Leuchtenoptik 10 ferner die zweite Optik 30 auf. Diese Optik 30 weist eine Öffnung 31 auf, in die die erste Optik 20 wenigstens mit ihrer Spitze 22 hineinragt. Zwischen der Spitze 22 der ersten Optik 20 (genauer dem in die Öffnung 31 ragenden Bereich 25 der ersten Optik 20, welcher zugleich bevorzugt den Auskoppelbereich 25 der ersten Optik 20 definiert) und dem die Öffnung 31 begrenzenden Bereich (Lichteinkoppelbereich 310) der zweiten Optik 30 ist bevorzugt ein Abstand bzw. Spalt bereitgestellt, um somit eine definierte und gezielte Lichtführung bzw. Lichtlenkung zu ermöglichen. Dieser Spalt ist, wie im weiteren noch beschrieben, durch relative Bewegung der Optiken 20, 30 zueinander bevorzugt veränderlich ausgebildet, um die Lichtabstrahlcharakteristik der Leuchtenoptik 10 entsprechend zu beeinflussen/verändern.

Mögliche Ausgestaltungsformen der erfindungsgemäßen zweiten Optik 30 sind beispielsweise in den Figuren 7 bis 10 gezeigt. Danach weitet sich die zweite Optik 30 bevorzugt von der ersten Optik 20 - also von der die erste Optik 20 aufnehmenden Öffnung 31 aufweisenden Seite - weg und besonders bevorzugt in Richtung der optischen Achse R der Leuchtenoptik 10 zu einem Lichtabgabebereich 32 der zweiten Optik 30 bzw. der Leuchtenoptik 10 hin auf. Die zweiten Optik 30 kann folglich eine zur ersten Optik 20 umgekehrte kegelstumpfförmige Form aufweisen. Diese kann an seiner der ersten Optik 20 abgewandten Seite den (flächigen) Lichtabgabebereich 32 aufweisen, der bevorzugt zu der ersten Optik 20 hin zu einem flächigen Stirnbereich 33 zuläuft. Der flächige Stirnbereich 33 kann dabei den Eintritt in die Öffnung 31 bzw. den Lichteinkoppelbereich 310 bilden. Insbesondere weist der Stirnbereich 33 die die erste Optik 20 wenigstens teilweise aufnehmende Öffnung 31 auf. Diese erstreckt sich dann von dem Stirnbereich 33 zum Bodenbereich 32 hin als Lichteinkoppelbereich 310. Bevorzugt ist die Form der Öffnung 31 in optischer und bevorzugt auch geometrischer Weise an die Form der ersten Optik 20 - wenigstens an den aufzunehmenden Teil 25 der ersten Optik 20 - angepasst. Die die erste Optik 20 wenigstens teilweise aufnehmende Öffnung 31 bzw. der diese begrenzende Lichteinkoppelbereich 310 kann zylindrisch (vgl. Figur 7a) oder auch kegelförmig bzw. konisch (vgl. Figuren 7b, 7c und 8 bis 10) ausgebildet sein; letzteres bevorzugt in der Weise, dass Öffnung 31 bzw. Lichteinkoppelbereich 310 vorzugsweise zum Lichtabgabebereich 32 hin zulaufen. Auch andere Ausgestaltungsformen sind denkbar.

Die zweite Optik 30 ist derart ausgebildet, um von der ersten Optik 20 ausgekoppeltes Licht in der Öffnung 31 - insbesondere über den Lichteinkoppelbereich 310 bei einer Vollkörper-Optik - einzukoppeln und über eine Umlenkfläche 36 der zweiten Optik 30 entsprechend derart umzulenken, um das in die zweite Optik 30 eingekoppelte Licht gerichtet über den Lichtabgabebereich 32 aus der zweiten Optik 30 abzugeben, wie dies den Figuren 9 und 10 zu entnehmen ist. Die Umlenkfläche 36 ist folglich bevorzugt eine die zweite Optik 30 bzgl. der optischen Achse R der Leuchtenoptik 10 bzw. insbesondere ihrer eigenen optischen Achse R2 seitlich begrenzende Fläche, um das in die zweite Optik 30 eingekoppelte Licht optisch zu beeinflussen und insbesondere zum Lichtabgabebereich 32 hin umzulenken. Die Kombination der beiden erfindungsgemäßen Optiken 20, 30 führt somit im Wesentlichen zu einer Eliminierung eines unkontrollierten Licht(anteil)es, wie er beispielsweise bei CPC-Konzentratoren (vgl. Figur 4b) oder TIR-Optiken (vgl. Figur 4c) bekannt ist. Das über die erste Optik 20 in Form eines Strahlteilers vorzugsweise komplett aufgeteilte bzw. aufgefächerte Licht kann somit bevorzugt gänzlich über die zweite Optik 30 gezielt aufgefangen und gerichtet abgegeben werden. Durch die Vermeidung von direkten Lichtanteilen sowie die definierte Lichtlenkung des bevorzugt gesamten Lichtanteils ermöglicht das zweistufige System eine besonders geringe Strahldivergenz.

Die zweite Optik 30 kann, wie auch die erste Optik 20, als Vollkörper ausgebildet sein.

Die Umlenkung zur gerichteten Lichtabgabe aus der zweiten Optik 30 wird bevorzugt dadurch erreicht, dass die zweite Optik 30 - insbesondere deren Umlenkfläche 36 - mittels Totalreflexion eine entsprechende gerichtete Lichtabgabe des in diese Optik 30 einkoppelten Lichts ermöglicht. Dies ist beispielsweise der Lichtlenkung, wie in den Figuren 9 und 10 dargestellt, zu entnehmen.

Wie in den Figuren 7a, 9 und 10 gezeigt, kann die Öffnung 31 vorzugsweise durchgehend durch die zweite Optik 30 ausgebildet sein. Entscheidend ist dabei vor allem, dass die strukturellen Merkmale der zweiten Optik 30 derart erhalten bleiben, um das von der ersten Optik 20 abgegebene Licht entsprechend aufzunehmen (also einzukoppeln) und dann möglichst alles Licht entsprechend definiert umzulenken und bevorzugt gerichtet abzugeben.

Wie Figuren 9 und 10 zu entnehmen ist, bildet der (flächige) Lichtabgabebereich 32 der zweiten Optik 30 bevorzugt gleichzeitig die Auskoppelfläche der Leuchtenoptik 10. Gemäß einer bevorzugten Ausgestaltungsform, wie beispielsweise in Figuren 7a, 7c, 9 und 10 dargestellt, weist der Lichtabgabebereich 32 der zweiten Optik 30 eine Ausnehmung 34 auf. Dabei handelt es sich bevorzugt um eine zentrale Ausnehmung 34, welche also bezüglich der optischen Achse (hier ebenso eine Längsachse, Mittelachse bzw. Rotationssymmetrieachse) R2 der zweiten Optik 30 bzw. R der Leuchtenoptik 10 mittig bzw. koaxial angeordnet ist. Diese Ausnehmung 34 dient insbesondere der Volumen optimierung der zweiten Optik 30 und ist daher bevorzugt in einem für die Lichtabgabe nicht-wirksamen Bereich 35 der zweiten Optik 30 vorgesehen. Dies kann beispielsweise auch deutlich den Figuren 9 und 10 entnommen werden, wonach die Ausnehmung 34 außerhalb der Strahlführung der Leuchtenoptik 10 liegt.

Die optischen Achsen R1 und R2 der ersten und zweiten Optik 20, 30 sind bevorzugt koaxial vorgesehen und deckungsgleich mit einer entsprechenden optischen Achse R der Leuchtenoptik 10.

In einer besonders einfachen und vorliegend nicht dargestellten Ausgestaltungsform ist es auch denkbar, dass die zweite Optik als einfacher Reflektor ausgebildet ist, welcher im Wesentlichen die gleiche Form bzw. äußerliche Kontur wie die dargestellte zweite Optik 30 haben kann. Insbesondere sollte die Form eines entsprechenden Reflektors derart ausgebildet sein, um das von der ersten Optik 20 ausgekoppelte Licht in gewünschter Weise über seine Umlenkfläche - als bevorzugt seine reflektierend ausgebildete Innenwand - gerichtet umzulenken, um somit mit einer geringen Strahldivergenz eine besonders gerichtete Lichtabgabe zu ermöglichen. Die Einkopplung in die Öffnung 31 eines solchen Reflektors - also der Lichteinkoppelbereich - fällt in diesem Fall zusammen mit der Auskopplung des Lichtes aus der ersten Optik 20 und entspricht dann der Lichtabgabe in der bzw. die Öffnung des Reflektors.

Auch eine Kombination von Reflektor und Vollmaterial als zweite Optik 30 ist denkbar, in dem beispielsweise zur Erhöhung der Effizienz die zweite Optik 30 beispielsweise an seinen äußeren Seitenflächen (hier die Umlenkflächen 36) mit einem Reflektor bzw. Reflektormaterial versehen ist.

Die erste Optik 20 und die zweite Optik 30 sind in Richtung der optischen Achse R der Leuchtenoptik 10 gesehen hintereinander und relativ zueinander entlang der optischen Achse R - und bevorzugt gleichzeitig in Richtung ihrer eigenen optischen Achsen R1, R2 - beweglich angeordnet, um eine Lichtabgabecharakteristik der Leuchtenoptik 10 zu ändern. Die Änderung der Lichtabgabecharakteristik kann dabei eine der folgenden einzeln oder in Kombination darstellen: ein Zoomen (vgl. bspw. Figur 10), also Aufweiten und Fokussieren, und/oder ein Verkippen (vgl. bspw. Figur 9) und/oder eine Änderung einer Streuung und/oder Farbkonversion des über die Leuchtenoptik 10 - und hier insbesondere über die zweite Optik 30, genauer den Lichtabgabebereich 32 - abgegebenen Lichts.

Um einen möglichst langen Einstellweg und eine ausreichend große Änderung der Lichtabgabecharakteristik der Leuchte 1 bewirken zu können, ist der die Öffnung 31 bzw. der die Öffnung 31 begrenzende Lichteinkoppelbereich 310 der zweiten Optik 30 in Richtung der optischen Achse R der Leuchtenoptik 10 gesehen größer ausgebildet ist, als ein Auskoppelbereich 25 der ersten Optik 20 und insbesondere als ein von der ersten Optik 20 ausgekoppeltes und auf den Lichteinkoppelbereich 310 auftreffendes Strahlbündel S1, vorzugsweise wenigstens anderthalb mal so groß, besonders bevorzugt wenigstens doppelt so groß.

Die Öffnung 31 bzw. der diese begrenzende Lichteinkoppelbereich 310 und/oder die Umlenkfläche 36 und/oder der Lichtabgabebereich 32 weisen bevorzugt eine strukturierte und/oder konturierte Oberfläche zur Beeinflussung des Lichts aufweist. Alternativ oder zusätzlich kann die Öffnung 31 bzw. der diese begrenzende Lichteinkoppelbereich 310 in Richtung der optischen Achse R der Leuchtenoptik 10 gesehen nicht konstant, beispielsweise parabelförmig oder diskontinuierlich, zulaufen. Dies ist in den Figuren 8 bis 10 zu erkennen, wonach die Öffnung 31 bzw. der Lichteinkoppelbereich 310 trichterförmig nach unten zuläuft. Somit trifft bei relativer Bewegung der Optiken 20, 30 entlang der optischen Achse R das von der ersten Optik 20 ausgekoppelte Strahlbündel S1 je nach relativer Position der Optiken 20, 30 zueinander auf unterschiedlich geneigte Bereiche des Lichteinkoppelbereichs 310 treffen, so dass die Strahlführung geändert werden kann. Alternativ oder zusätzlich kann sich die Umlenkfläche 36 in Richtung der optischen Achse R der Leuchtenoptik 10 bzw. zweiten Optik 30 gesehen nicht konstant, beispielsweise parabelförmig oder diskontinuierlich, aufweiten. In den Ausführungsformen der Figuren 9 und 10 weist die Umlenkfläche 36 bspw. eine leicht nach außen gewölbte bzw. bombierte Form auf. Somit kann in Abhängigkeit davon, wo das in die zweite Optik 30 eingekoppelte Strahlbündel auf S2 auf die Umlenkfläche 36 trifft, dieses unterschiedlich umgelenkt werden.

Der Lichtabgabebereich 32 erstreckt sich bevorzugt wenigstens teilweise in einer Ebene, vorzugsweise senkrecht zur optischen Achse R der Leuchtenoptik 10, wie in Figur 8 dargestellt. Es ist jedoch auch denkbar, dass sich der Lichtabgabebereich 32 bezüglich der Ebene neigt bzw. geneigt ausgerichtet ist. Auch ist es denkbar, dass der Lichtabgabebereich 32 kontinuierlich bzw. diskontinuierlich zur optischen Achse R (vgl. Figur 10) und dabei wahlweise zur ersten Optik 20 hin zuläuft (vgl. Figur 9). Somit kann in Abhängigkeit davon, wo das von der Umlenkfläche 36 umgelenkte Strahlbündel S3 der zweite Optik 30 auf den Lichtabgabebereich 32 trifft, dieses unterschiedlich umgelenkt - hier insbesondere ausgekoppelt - werden.

Die insbesondere der veränderlichen Lichtabgabecharakteristik dienenden Bereiche, also insbesondere der Lichteinkoppelbereich 310 (bzw. die Öffnung 31) und/oder die Umlenkfläche 36 und/oder der Lichtabgabebereich 32, können kontinuierlich oder stufenweise ineinander übergehende Bereiche unterschiedlicher optischer Beeinflussung aufweisen. Dasselbe gilt im Übrigen auch für den in die Öffnung der zweiten Optik 30 ragenden Lichtauskoppelbereich 25 der ersten Optik 20. Diese können sich beispielsweise durch unterschiedliche Einfallswinkel - als Neigung bzgl. des auftreffenden Lichtbündels S1, S2, S3 - oder entsprechend definierte Struktur bzw. Kontur ergeben. Der vorbezeichnete Übergang der Bereiche unterschiedlicher optischer Beeinflussung 25, 31, 310, 36, 32 kann sich bspw. in radialer Richtung gesehen ergeben, also entlang der Oberfläche, so dass bspw. ringförmige Bereiche unterschiedlicher optischer Beeinflussung ineinander übergehen. Alternativ oder zusätzlich ist es auch denkbar, dass die Bereiche unterschiedlicher optischer Beeinflussung 25, 31, 310, 36, 32 in Umfangsrichtung um die optische Achse R vorgesehen sind; sich also Bereiche unterschiedlicher optischer Beeinflussung 25, 31, 310, 36, 32 in Umfangsrichtung gesehen ineinander übergehen, um bspw. eine definiert asymmetrische Lichtabgabe ermöglicht werden.

Insgesamt kann durch definierte Ausgestaltung der Bereiche optischer Beeinflussung 25, 31, 310, 36, 32 der Optiken 20, 30, insbesondere der zweiten Optik 30, eine über einen definierten und vorzugsweise großen Bereich veränderliche Lichtabgabecharakteristik erzielt werden. Dabei ist es unerheblich, ob die relative Bewegung der Optiken 20, 30 zueinander sich aus einer Bewegung der ersten Optik 20 (bei lagefixierter zweiter Optik 30), der zweiten Optik 30 (bei lagefixierter erster Optik 20) oder beider Optiken 20, 30 ergibt. Bevorzugt ist die erste Optik 20 fixiert und die zweite Optik 30 relativ zu dieser - insbesondere entlang der optischen Achse R - beweglich, wie dies in Figur 8 durch den Pfeil P1 gezeigt ist.

Figur 8 zeigt eine erfindungsgemäße Leuchtenoptik 10 bzw. Leuchte 1 mit parabelförmiger erster Optik 20 als Vollkörper, wie sie auch in Figur 6 dargestellt ist. Deren Lichtauskoppelbereich 25 ragt dabei in eine Öffnung 31 einer als Vollkörper ausgebildeten zweiten Optik 30. Die Öffnung 31 bzw. deren Lichteinkoppelbereich 310 weist eine im Querschnitt gesehen konkave Kegelform auf, so dass - je nach Position der Optiken 20, 30 entlang der optischen Achse R gesehen - das Licht bzgl. der optischen Achse R über anders geneigte Flächen des Lichteinkoppelbereichs 310 in die zweite Optik 30 eingekoppelt und somit anders gelenkt wird. Das in die zweite Optik 30 eingekoppelte Licht bzw. Lichtbündel kann somit bei veränderter Position der Optiken 20, 30 zueinander bevorzugt auf unterschiedliche Bereiche der Umlenkfläche 36 gelenkt werden. Die Umlenkfläche 36 der zweiten Optik 30 wiederum bildet gemäß Figur 8 im Querschnitt einen Konus mit leicht gekrümmter - also nicht kontinuierlicher - Aufweitung. Somit findet auch hier eine über die Fläche - in Richtung der optischen Achse R gesehen - unterschiedlich gerichtete Umlenkung des Lichtes in der zweiten Optik 30 statt, um bevorzugt auf unterschiedliche Bereiche des Lichtabgabebereichs 32 zur Lichtauskopplung zu treffen. Der Lichtabgabebereich 32 ist gemäß Figur 8 eben ausgebildet; erstreckt sich also in einer orthogonal zur optischen Achse R stehenden Ebene. Sowohl der Lichtabgabebereich 32 als auch die anderen Bereiche unterschiedlicher optischer Beeinflussung 25, 31, 310, 36 können in radialer und/oder in Umfangsrichtung gesehen ferner definierte strukturierte und/oder konturierte Bereiche aufweisen.

Figur 9 zeigt eine erfindungsgemäße Leuchtenoptik 10 bzw. Leuchte 1 mit derselben ersten Optik 20 wie auch in Figur 8 bzw. 6. Deren Lichtauskoppelbereich 25 ragt in eine Öffnung 31 einer als Vollkörper ausgebildeten zweiten Optik 30. Die Öffnung 31 bzw. deren Lichteinkoppelbereich 310 weist im Querschnitt gesehen eine Trichterform auf, so dass - je nach Position der Optiken 20, 30 entlang der optischen Achse R gesehen - das Licht bzgl. der optischen Achse R über anders geneigte Flächen des Lichteinkoppelbereichs 310 in die zweite Optik 30 eingekoppelt und somit anders gelenkt wird. Das in die zweite Optik 30 eingekoppelte Licht bzw. Lichtbündel kann somit bei veränderter Position der Optiken 20, 30 zueinander bevorzugt auf unterschiedliche Bereiche der Umlenkfläche 36 gelenkt werden. Die Umlenkfläche 36 der zweiten Optik 30 wiederum bildet gemäß Figur 9 im Querschnitt einen Konus mit (leicht) bombierter - also nach außen gewölbter - Oberfläche. Somit findet auch hier eine über die Fläche 36 - in Richtung der optischen Achse R gesehen - unterschiedlich gerichtete Umlenkung des Lichtes in der zweiten Optik 30 statt, um bevorzugt auf unterschiedliche Bereiche des Lichtabgabebereichs 32 zur Lichtauskopplung zu treffen. Der Lichtabgabebereich 32 ist gemäß Figur 9 von der Außenkante zur optischen Achse R hin gewölbt und läuft zur ersten Optik 20 hin zu. Sowohl der Lichtabgabebereich 32 als auch die anderen Bereiche unterschiedlicher optischer Beeinflussung 25, 31, 310, 36 können in radialer und/oder in Umfangsrichtung gesehen ferner definierte strukturierte und/oder konturierte Bereiche aufweisen. Der Lichtabgabebereich 32 weist eine Ausnehmung 34 als optisch nicht-wirksamer Bereich 35 auf, welcher hier durchgehend mit der Öffnung 31 ausgebildet ist. Durch diese Ausgestaltung der Bereiche 31, 310, 36, 32 optischer Beeinflussung insbesondere der zweiten Optik 30 kann bspw. durch gezielte Depositionierung der Optik(stuf)en 20, 30 zueinander die Abstrahlcharakteristik in der Weise eingestellt werden kann, dass die Hauptabstrahlrichtung bzw. das entsprechende Lichtbündel H bzgl. der optischen Achse R verkippt wird. Mit zunehmendem Abstand der beiden Optiken 20, 30 zueinander (vgl. Bewegung P2 der zweiten Optik 30) wird die Hauptabstrahlrichtung H nach außen verkippt P20 (vgl. Figur 9a). Folglich wird mit abnehmendem Abstand der beiden Optiken 20, 30 zueinander (vgl. Bewegung P3 der zweiten Optik 30) die Hauptabstrahlrichtung H nach innen verkippt P30 (vgl. Figur 9a).

Figur 10 zeigt eine erfindungsgemäße Leuchtenoptik 10 bzw. Leuchte 1 mit derselben ersten Optik 20 wie auch in Figuren 6, 8 und 9. Deren Lichtauskoppelbereich 25 ragt in eine Öffnung 31 einer als Vollkörper ausgebildeten zweiten Optik 30. Die Öffnung 31 bzw. deren Lichteinkoppelbereich 310 weist - vergleichbar der Ausgestaltung nach Figur 9 - im Querschnitt gesehen eine Trichterform auf, so dass - je nach Position der Optiken 20, 30 entlang der optischen Achse R gesehen - das Licht bzgl. der optischen Achse R über anders geneigte Flächen des Lichteinkoppelbereichs 310 in die zweite Optik 30 eingekoppelt und somit anders gelenkt wird. Das in die zweite Optik 30 eingekoppelte Licht bzw. Lichtbündel kann somit bei veränderter Position der Optiken 20, 30 zueinander bevorzugt auf unterschiedliche Bereiche der Umlenkfläche 36 gelenkt werden. Die Umlenkfläche 36 der zweiten Optik 30 wiederum bildet gemäß Figur 10 im Querschnitt einen Konus mit kontinuierlich sich aufweitender Oberfläche 36; also einen Kegelstumpf. Somit findet eine über die Umlenkfläche 36 - in Richtung der optischen Achse R gesehen - unterschiedlich geartete, gerichtete Umlenkung des Lichtes in der zweiten Optik 30 statt, um bevorzugt auf unterschiedliche Bereiche des Lichtabgabebereichs 32 zur Lichtauskopplung zu treffen. Der Lichtabgabebereich 32 ist gemäß Figur 10 im Wesentlichen konkav gewölbt. Sowohl der Lichtabgabebereich 32 als auch die anderen Bereiche unterschiedlicher optischer Beeinflussung 25, 31, 310, 36 können in radialer und/oder in Umfangsrichtung gesehen ferner definierte strukturierte und/oder konturierte Bereiche aufweisen. Der Lichtabgabebereich 32 weist eine Ausnehmung 34 als optisch nicht-wirksamer Bereich 35 auf, welcher hier durchgehend mit der Öffnung 31 ausgebildet ist. Durch diese Ausgestaltung der Bereiche 25, 31, 310, 36, 32 optischer Beeinflussung insbesondere der zweiten Optik 30 kann bspw. durch gezielte Depositionierung der Optik(stuf)en 20, 30 zueinander die Abstrahlcharakteristik in der Weise eingestellt werden kann, dass der Öffnungswinkel α der Hauptabstrahlrichtung bzw. des entsprechenden Lichtbündels H beeinflusst - also verändert - wird. Mit zunehmendem Abstand der beiden Optiken 20, 30 zueinander (vgl. Bewegung P4 der zweiten Optik 30) wird das Strahlbündel H bzw. dessen Öffnungswinkel α aufgeweitet P40 (vgl. Figur 10a). Folglich wird mit abnehmendem Abstand der beiden Optiken 20, 30 zueinander (vgl. Bewegung P5 der zweiten Optik 30) das Strahlbündel H bzw. dessen Öffnungswinkel α fokussiert P50 (vgl. Figur 10a).

Selbstverständlich sind auch Ausgestaltungen der erfindungsgemäßen Leuchtenoptik 10 bzw. Leuchte 1 denkbar, die eine beliebige Kombination der vorbezeichneten geometrischen Ausgestaltung der Bereiche optischer Beeinflussung 25, 31, 310, 36, 32 bilden. So kann bspw. auch eine Leuchtenoptik 10 bzw. Leuchte 1 bereitgestellt werden, die sowohl ein Verkippen als auch eine Beeinflussung des Öffnungswinkels α des Lichtbündels H ermöglicht.

In Figur 11 ist eine weitere Ausgestaltungform gezeigt, welche ein Leuchtenoptiksystem 100 gemäß der Erfindung darstellt. Ein solches Leuchtenoptiksystem 100 weist bevorzugt wenigstens zwei Leuchtenoptiken 10 gemäß der vorliegenden Erfindung auf. Das Leuchtenoptiksystem 100 weist hierzu eine erste Gruppe von ersten Optiken 20 und eine zweite Gruppe von zweiten Optiken 30 auf. Die Gruppe von ersten Optiken 20 und die Gruppe von zweiten Optiken (30) sind relativ zueinander entlang der jeweiligen optischen Achsen R (R1, R2) beweglich ausgebildet, um eine Lichtabgabecharakteristik des Leuchtenoptiksystems 100 zu ändern.

Dabei sind bevorzugt die ersten Optiken 20 der ersten Gruppe und/oder die zweiten Optiken 30 der zweiten Gruppe jeweils mittels Verbindungselementen 101, 102 miteinander verbunden. Diese Verbindungselemente 101, 102 sind bevorzugt, wie in Figur 11 dargestellt, als plattenartige Elemente ausgebildet, welche die jeweiligen Optiken 20, 30 tragen. Auch andere Ausgestaltungsformen sind selbstverständlich denkbar. Wie in Figur 11 dargestellt, können bevorzugt wenigstens zwei solcher Verbindungselemente 101, 102 bereitgestellt sein, wobei dann ein erstes Verbindungselement 101 die Gruppe von ersten Optiken 20 und ein zweites Verbindungselement 102 die Gruppe von zweiten Optiken 30 trägt.

Die Verbindungselemente 101, 102 können ferner Führungselemente 103, 104 aufweisen, um mehrere Verbindungselemente 101, 102 - und somit die mit diesen verbundenen (Gruppen von) Optiken 20, 30 - geführt relativ zueinander zu bewegen. Mittels dieser Führungselemente 103, 104 kann es somit ermöglicht werden, eine definierte Führung der beiden Verbindungselemente 101, 102 bzw. (Gruppen von) Optiken 20, 30 zueinander und insbesondere entlang der optischen Achse R zu ermöglichen. Hierzu sind bevorzugt die optischen Achsen R der jeweiligen Leuchtenoptiken 10 parallel zueinander ausgerichtet.

In einer bevorzugten Ausgestaltungsform ist es denkbar, dass die jeweiligen (Gruppen von) Optiken 20, 30 mit dem ihm zugeordneten Verbindungselement 101, 102 integral ausgebildet sind.

Die vorliegende Erfindung ist auf die vorhergehenden Ausführungsbeispiele nicht beschränkt. Die Merkmale der einzelnen Ausführungsbeispiele sind in beliebiger Weise miteinander austauschbar und/oder kombinierbar, sofern sie vom Gegenstand der nachfolgenden Ansprüche erfasst sind. Insbesondere ist die vorliegende Erfindung nicht auf bestimmte Materialien der Optiken und deren spezifische Geometrie - insbesondere im Hinblick auf die Bereiche optischer Beeinflussung - beschränkt, solange sie die Aufgabe einer möglichst geringen Strahldivergenz bei definiert bzw. gewünscht gerichteter, veränderlicher Lichtabgabe erfüllen.

## Patentansprüche

1. Leuchtenoptik (10) aufweisend:
eine erste Optik (20),
eine zweite Optik (30), welche eine Öffnung (31) aufweist, wobei sich die zweite Optik (30) von der ersten Optik (20) weg zu einem Lichtabgabebereich (32) hin aufweitet und derart ausgebildet ist, um von der ersten Optik (20) ausgekoppeltes Licht in der Öffnung (31) einzukoppeln und über eine Umlenkfläche (36) der zweiten Optik (30) gerichtet über den Lichtabgabebereich (32) aus der zweiten Optik (30) abzugeben,
wobei die erste Optik (20) und die zweite Optik (30) in Richtung einer optischen Achse (R) der Leuchtenoptik (10) gesehen hintereinander und relativ zueinander entlang der optischen Achse (R) beweglich angeordnet sind, um eine Lichtabgabecharakteristik der Leuchtenoptik (10) zu ändern,
**dadurch gekennzeichnet, dass**
die erste Optik (20) von einem Lichteintrittsbereich (21) weg erstreckend zu einer Spitze (22) hin zuläuft, und
die erste Optik (20) wenigstens mit der Spitze (22) in die Öffnung (31) hineinragt.

2. Leuchtenoptik (10) gemäß Anspruch 1, wobei die Änderung der Lichtabgabecharakteristik ein Zoomen, also eine Veränderung des Öffnungswinkels α eines abgegebenen Lichtbündels (H) zum Aufweiten und Fokussieren, und/oder ein Verkippen und/oder eine Änderung einer Streuung und/oder Farbkonversion des über die Leuchtenoptik (10) abgegebenen Lichts bzw. Lichtbündels (H) aufweist.

3. Leuchtenoptik (10) gemäß Anspruch 1 oder 2,
wobei die erste Optik (20) als Vollkörper gebildet ist, und/oder
wobei die erste Optik (20) als Strahlteiler ausgebildet ist, und/oder
wobei die erste Optik (20) vom Lichteintrittsbereich (21) zur Spitze (22) hin
verlaufend im Querschnitt eine parabelförmige oder kreisbogenförmige oder
eine sonstige kurvenförmige Außenkontur aufweist, wobei die erste Optik (20) vorzugsweise im Wesentlichen kegelförmig ausgebildet ist.

4. Leuchtenoptik (10) gemäß einem der vorhergehenden Ansprüche,
wobei die den Lichteintrittsbereich (21) mit der Spitze (22) verbindende Seitenfläche (23) der ersten Optik (20) rotationssymmetrisch ausgebildet ist, und/oder
wobei die den Lichteintrittsbereich (21) mit der Spitze (22) verbindende Seitenfläche (23) der ersten Optik (20) derart ausgebildet ist, dass über den Lichteintrittsbereich (21) in die erste Optik (20) eingekoppeltes Licht, vorzugsweise alles über den Lichteintrittsbereich (21) in die erste Optik (20) eingekoppelte Licht, an der Seitenfläche (23) derart totalreflektiert wird, dass es an der jeweils gegenüberliegenden Seite über die Seitenfläche (23) der ersten Optik (20), insbesondere im Bereich der Spitze (22) der ersten Optik (20), aus dieser ausgekoppelt wird, wobei vorzugsweise der Fokuspunkt (F) der totalreflektierenden Seitenfläche (23) im Zentrum des Lichteintrittsbereich (21) liegt und vorzugsweise innerhalb oder außerhalb der ersten Optik (20), besonders vorzugsweise auf oder abseits der optischen Achse (R), liegt.

5. Leuchtenoptik (10) gemäß einem der vorhergehenden Ansprüche, wobei die den Lichteintrittsbereich (21) mit der Spitze (22) verbindende Seitenfläche (23) der ersten Optik (20) sich in einem Bereich (24) nahe dem Lichteintrittsbereich (21) von dem Lichteintrittsbereich (21) zur Spitze (22) hin aufweitend oder zylindrisch erstreckt.

6. Leuchtenoptik (10) gemäß einem der vorhergehenden Ansprüche,
wobei die zweite Optik (30) als Reflektor ausgebildet ist, um das von der ersten Optik (20) ausgekoppelte Licht gerichtet umzulenken, und/oder wobei die zweite Optik (30) als Vollkörper ausgebildet ist, und/oder wobei die zweite Optik (30) derart ausgebildet ist, um das Licht mittels Reflexion oder Totalreflexion zur gerichteten Lichtabgabe aus der zweiten Optik (30) umzulenken, und/oder
wobei die zweite Optik (30) im Wesentlichen eine zur ersten Optik (20) umgekehrte kegelstumpfförmige Form aufweist, welche an ihrer der ersten Optik (20) abgewandten Seite den flächigen Lichtabgabebereich (32) aufweist, der zu der ersten Optik (20) hin zu einem flächigen Stirnbereich (33) zuläuft, wobei vorzugsweise der Stirnbereich (33) die die erste Optik (20) wenigstens teilweise aufnehmende Öffnung (31) aufweist, und/oder wobei die zweite Optik (30) einen die Öffnung (31) begrenzenden Lichteinkoppelbereich (310) aufweist, über welchen von der ersten Optik (20) ausgekoppeltes Licht in die zweite Optik (30) eingekoppelt wird, wobei der Lichteinkoppelbereich (310) vorzugsweise zum Lichtabgabebereich (32) hin zuläuft oder zylindrisch ausgebildet ist, wobei die Öffnung (31) vorzugsweise durchgehend durch die zweite Optik (30) ausgebildet ist.

7. Leuchtenoptik (10) gemäß einem der vorhergehenden Ansprüche, wobei die Öffnung (31) bzw. der die Öffnung (31) begrenzende Lichteinkoppelbereich (310) der zweiten Optik (30) in Richtung der optischen Achse (R, R2) gesehen größer ausgebildet ist, als ein Auskoppelbereich (25) der ersten Optik (20) und insbesondere als ein von der ersten Optik (20) ausgekoppeltes und auf den Lichteinkoppelbereich (310) auftreffendes Strahlbündel (S1), vorzugsweise wenigstens anderthalb mal so groß, besonders bevorzugt wenigstens doppelt so groß.

8. Leuchtenoptik (10) gemäß einem der vorhergehenden Ansprüche, wobei die Umlenkfläche (36) eine die zweite Optik (30) bzgl. der optischen Achse (R, R2) seitlich begrenzende Fläche ist, um das in die zweite Optik (30) eingekoppelte Licht optisch zu beeinflussen und insbesondere zum Lichtabgabebereich (32) hin umzulenken.

9. Leuchtenoptik (10) gemäß einem der vorhergehenden Ansprüche, wobei die Öffnung (31), insbesondere deren Lichteinkoppelbereich (310), in Richtung der optischen Achse (R, R2) gesehen nicht konstant, beispielsweise parabelförmig oder diskontinuierlich, zuläuft und/oder wobei sich die Umlenkfläche (36) in Richtung der optischen Achse (R, R2) gesehen nicht konstant, beispielsweise parabelförmig oder diskontinuierlich, aufweitet.

10. Leuchtenoptik (10) gemäß einem der vorhergehenden Ansprüche,
wobei der Lichtabgabebereich (32) gleichzeitig die Auskoppelfläche der Leuchtenoptik (10) bildet, und/oder
wobei sich der Lichtabgabebereich (32) wenigstens teilweise in einer Ebene, vorzugsweise senkrecht zur optischen Achse (R, R2), erstreckt und/oder wobei der Lichtabgabebereich (32) wenigstens teilweise bezüglich der Ebene geneigt ist und/oder wobei der Lichtabgabebereich (32) wenigstens teilweise kontinuierlich bzw. diskontinuierlich zur optischen Achse (R, R2) und vorzugsweise auch zur ersten Optik (20) hin zuläuft, und/oder wobei der Lichtabgabebereich (32) der zweiten Optik (30) eine Ausnehmung (34), vorzugsweise eine zentrale Ausnehmung (34), aufweist, welche besonders bevorzugt in einem für die Lichtabgabe nicht-wirksamen Bereich (35) vorgesehen ist, wobei die Ausnehmung (34) bevorzugt integral mit der Öffnung (31) ausgebildet ist.

11. Leuchtenoptik (10) gemäß einem der vorhergehenden Ansprüche,
wobei die Öffnung (31) bzw. der Lichteinkoppelbereich (310) und/oder die Umlenkfläche (36) und/oder der Lichtabgabebereich (32) eine strukturierte und/oder konturierte Oberfläche zur Beeinflussung des Lichts aufweist, und/oder
wobei der Lichteinkoppelbereich (310) und/oder die Umlenkfläche (36) und/oder der Lichtabgabebereich (32) kontinuierlich oder stufenweise ineinander übergehende Bereiche unterschiedlicher optischer Beeinflussung aufweisen.

12. Leuchtenoptiksystem (100), aufweisend wenigstens zwei Leuchtenoptiken (10) gemäß einem der vorhergehenden Ansprüche mit einer ersten Gruppe von ersten Optiken (20) und einer zweiten Gruppe von zweiten Optiken (30), wobei die Gruppe von ersten Optiken (20) und die Gruppe von zweiten Optiken (30) relativ zueinander entlang der jeweiligen optischen Achsen (R, R1, R2) beweglich ausgebildet sind, um eine Lichtabgabecharakteristik des Leuchtenoptiksystems (100) zu ändern.

13. Leuchtenoptiksystem nach Anspruch 12, wobei die ersten Optiken (20) der ersten Gruppe und/oder die zweiten Optiken (30) der zweiten Gruppe jeweils mittels Verbindungselementen (101, 102) miteinander verbunden sind, wobei vorzugsweise die Verbindungselemente (101, 102) Führungselemente (103, 104) aufweisen, um mehrere Verbindungselemente (101, 102) geführt relativ zueinander zu bewegen, und/oder
wobei vorzugsweise die Verbindungselemente (101, 102) mit den jeweiligen Optiken (20, 30) integral ausgebildet sind.

14. Leuchtenoptiksystem (100) gemäß Anspruch 12 oder 13, wobei die optischen Achsen (R) der Leuchtenoptiken (10) parallel zueinander ausgerichtet sind.

15. Leuchte (1) aufweisend eine Leuchtenoptik (10) gemäß einem der Ansprüchen 1 bis 11 oder ein Leuchtenoptiksystem (100) gemäß einem der Ansprüchen 12 bis 14, ferner aufweisend wenigstens ein Leuchtmittel (2) zur Einkopplung von Licht in die erste Optik (20) oder die ersten Optiken (20),
wobei vorzugsweise das Leuchtmittel von der ersten Optik (20), insbesondere dem Lichteintrittsbereich der ersten Optik (20), beabstandet vorgesehen ist, wobei vorzugsweise das Leuchtmittel (2) eine LED oder OLED ist.

## Claims

1. A lighting lens (10) comprising:
a first lens (20),
a second lens (30) comprising an opening (31), wherein the second lens (30) flares away from the first lens (20) towards a light output region (32) and is configured so as to couple light disengaged from the first lens (20) in the opening (31) and to output it out of the second lens (30) via the light output region (32), guided by a deflection surface (36) of the second lens (30),
wherein the first lens (20) and the second lens (30) are movably arranged in series and
relative to one another along the optical axis (R), when viewed in the direction of an optical axis (R) of the lighting lens (10), in order to change a light output characteristic of the lighting lens (10),
**characterized in that**
the first lens (20) converges into a tip (22) extending away from a light input region (21), and
the first lens (20) projects into the opening (31) at least with the tip (22).

2. The lighting lens (10) according to claim 1, wherein the change in the light output characteristic comprises a zooming, i.e., a change in the opening angle a of an output light bundle (H) for flaring and focusing, and/or a tilting and/or a change of a scattering and/or color conversion of the light or light beam (H) output by the lighting lens (10).

3. The lighting lens (10) according to claim 1 or 2,
wherein the first lens (20) is configured as a solid body, and/or
wherein the first lens (20) is configured as a beam splitter, and/or
wherein the first lens (20) has a parabolic or circularly arcuate or otherwise curvilinear outer contour extending from the light input region (21) towards the tip (22) in cross-section,
wherein the first lens (20) is preferably configured so as to be substantially tapering.

4. The lighting lens (10) according to any of the preceding claims,
wherein the lateral surface (23) of the first lens (20) connecting the light input region (21) to the tip (22) is configured so as to be rotationally symmetrical, and/or
wherein the lateral surface (23) of the first lens (20) connecting the light input region (21) to the tip (22) is configured in such a way that light coupled into the first lens (20) via the light input region (21), preferably all light coupled into the first lens (20) via the light input region (21), is totally reflected on the lateral surface (23) in such a way that, on the respective opposite side, it is decoupled from said lens via the lateral surface (23) of the first lens (20), in particular in the region of the tip (22) of the first lens (20), wherein preferably the focus point (F) of the totally reflecting lateral surface (23) lies in the center of the light input region (21) and preferably inside or outside of the first lens (20), particularly preferably on or off the optical axis (R).

5. The lighting lens (10) according to any of the preceding claims, wherein, in a region (24) near the light input region (21), the lateral surfaces (23) of the first lens (20) connecting the light input region (21) to the tip (22) extend from the light input region (21) to the tip (22) in a flaring or cylindrical manner.

6. The lighting lens (10) according to any of the preceding claims,
wherein the second lens (30) is configured as a reflector in order to deflect the light decoupled from the first lens (20) in a guided manner, and/or
wherein the second lens (30) is configured as a solid body, and/or
wherein the second lens (30) is configured so as to deflect the light by means of reflection or total reflection for the guided output of light from the second lens (30), and/or
wherein the second lens (30) has a substantially frustoconical shape inverted with respect to the first lens (20), having the laminar light output region (32) on its side facing away from the first lens (20), which region converges into a laminar front region (33) approaching the first lens (20), wherein the front region (33) preferably comprises the opening (31) that at least partially receives the first lens (20), and/or
wherein the second lens (30) comprises a light coupling region (310) delimiting the opening (31), via which region light decoupled from the first lens (20) is coupled into the second lens (30), wherein the light coupling region (310) preferably converges towards the light output region (32) or is cylindrical in form, wherein the opening (31) is preferably continuously formed by the second lens (30).

7. The lighting lens (10) according to any of the preceding claims, wherein the opening (31) or the light coupling region (310) of the second lens (30) delimiting the opening (31) when viewed in the direction of the optical axis (R, R2) is configured so as to be larger than a decoupling region (25) of the first lens (20), and in particular larger than a beam bundle (Si) decoupled from the first lens (20) and striking the light coupling region (310), preferably at least one and a half times as large, particularly preferably at least twice as large.

8. The lighting lens (10) according to any of the preceding claims, wherein the deflection surface (36) is a surface laterally delimiting the second lens (30) with respect to the optical axis (R, R2) in order to optically influence the light coupled into the second lens (30) and in particular to deflect it towards the light output region (32).

9. The lighting lens (10) according to any of the preceding claims, wherein the opening (31), in particular the light coupling region (310), when viewed in the direction of the optical axis (R, R2), does not constantly converge, for example parabolically or discontinuously, and/or wherein the deflection surface (36), when viewed in the direction of the optical axis (R, R2), does not constantly flare, for example for parabolically or discontinuously.

10. The lighting lens (10) according to any of the preceding claims, wherein the light output region (32) simultaneously forms the decoupling surface of the lighting lens (10), and/or
wherein the light output region (32) at least partially extends in a plane, preferably perpendicular to the optical axis (R, R2), and/or wherein the light output region (32) is at least partially inclined relative to the plane and/or wherein the light output region (32) at least partially extends continuously or discontinuously relative to the optical axis (R, R2) and preferably also towards the first lens (20), and/or,
wherein the light output region (32) of the second lens (30) comprises a recess (34), preferably a central recess (34), which is particularly preferably provided in a region (35) that is non-effective for the light output, wherein the recess (34) is preferably integrally formed with the opening (31).

11. The lighting lens (10) according to any of the preceding claims,
wherein the opening (31) or light coupling region (310) and/or the deflection surface (36) and/or the light output region (32) comprise a structured and/or contoured surface for influencing the light, and/or
wherein the light coupling region (310) and/or the deflection surface (36) and/or the light output region (32) comprise continuously or incrementally merging regions of various optical influences.

12. A lighting lens system (100) comprising at least two lighting lenses (10) according to any of the preceding claims, having a first group of first lenses (20) and a second group of second lenses (30), wherein the group of first lenses (20) and the group of second lenses (30) are configured so as to be movable relative to one another along the respective optical axes (R, Ri, R2) in order to change a light output characteristic of the lighting lens system (100).

13. The lighting lens system according to claim 12, wherein the first lens (20) of the first group and/or the second lens (30) of the second group are respectively connected to one another by means of connecting elements (101, 102), wherein the connecting elements (101, 102) preferably comprise guide elements (103, 104) for guiding a plurality of connecting elements (101, 102) relative to one another, and/or
wherein the connecting elements (101, 102) are preferably integrally formed with the respective lenses (20, 30).

14. The lighting lens system (100) according to claim 12 or 13, wherein the optical axes (R) of the lighting lens (10) are aligned parallel to one another.

15. A lamp (1) comprising a lighting lens (10) according to any of the claims 1 to 11 or a lighting lens system (100) according to any of the claims 12 to 14, further comprising at least one lighting means (2) for coupling light into the first lens (20) or the first lenses (20),
wherein the lighting means is preferably provided spaced apart from the first lens (20), in particular the light input region of the first lens (20), wherein the lighting means (2) is preferably an LED or OLED.

## Revendications

1. Optique d'éclairage (10) présentant :
une première optique (20),
une deuxième optique (30) présentant une ouverture (31), ladite deuxième optique (30) allant en s'élargissant, en s'éloignant de la première optique (20), pour former une zone de sortie de lumière (32) et étant conçue de manière à injecter dans l'ouverture (31) la lumière sortant de la première optique (20) afin de la faire sortir de la deuxième optique (30) par la zone de sortie de lumière (32) après qu'elle a été orientée par le biais d'une surface de déflexion (36) de la deuxième optique (30),
ladite première optique (20) et ladite deuxième optique (30) étant agencées l'une derrière l'autre, vues dans la direction d'un axe optique (R) de l'optique d'éclairage (10), et étant mobiles l'une par rapport à l'autre le long dudit axe optique (R) pour pouvoir modifier une caractéristique de sortie de lumière de l'optique d'éclairage (10),
**caractérisée en ce que**
la première optique (20) converge en s'étendant depuis une zone d'entrée de lumière (21) jusqu'à une pointe (22), et
la première optique (20) fait saillie, au moins par sa pointe (22), dans l'ouverture (31).

2. Optique d'éclairage (10) selon la revendication 1, dans laquelle la modification de la caractéristique de sortie de lumière présente un effet zoom, c'est-à-dire un changement d'angle d'ouverture α d'un faisceau de lumière sortante (H), de manière qu'il s'élargisse ou se concentre, et/ou un effet de basculement et/ou une modification de la diffusion et/ou du changement de couleur de la lumière ou du faisceau de lumière (H) sortant de l'optique d'éclairage (10).

3. Optique d'éclairage (10) selon la revendication 1 ou 2,
dans laquelle la première optique (20) est constituée sous la forme d'un corps plein, et/ou dans laquelle la première optique (20) est conçue sous la forme d'un miroir semi-réfléchissant, et/ou
dans laquelle la première optique (20) présente, vue en coupe transversale, depuis la zone d'entrée de lumière (21) jusqu'à la pointe (22), un contour extérieur en forme de parabole ou d'arc de cercle ou une autre forme courbe, ladite première optique (20) étant de préférence conçue selon une forme sensiblement sphérique.

4. Optique d'éclairage (10) selon l'une des revendications précédentes,
dans laquelle la surface latérale (23) de la première optique (20) qui relie la zone d'entrée de lumière (21) à la pointe (22) est conçue symétrique en rotation, et/ou
dans laquelle la surface latérale (23) de la première optique (20) qui relie la zone d'entrée de lumière (21) à la pointe (22) est conçue de manière que de la lumière injectée dans la première optique (20) par la zone d'entrée de lumière (21), et de préférence toute la lumière injectée dans la première optique (20) par la zone d'entrée de lumière (21), soit réfléchie en totalité sur la surface latérale (23) pour pouvoir ainsi en sortir, au niveau du côté opposé respectif, par le biais de la surface latérale (23) de la première optique (20), notamment dans la région de la pointe (22) de la première optique (20), le point focal (F) de la surface latérale (23) à réflexion totale se situant de préférence au centre de la zone d'entrée de lumière (21) et de préférence à l'intérieur ou à l'extérieur de la première optique (20), tout préférablement sur ou à l'écart de l'axe optique (R).

5. Optique d'éclairage (10) selon l'une des revendications précédentes, dans laquelle la surface latérale (23) de la première optique (20) qui relie la zone d'entrée de lumière (21) à la pointe (22) va en s'élargissant, à proximité (24) de la zone d'entrée de lumière (21), ou en s'étendant de façon cylindrique à partir de la zone d'entrée de lumière (21) en direction de la pointe (22).

6. Optique d'éclairage (10) selon l'une des revendications précédentes,
dans laquelle la deuxième optique (30) est conçue à la manière d'un réflecteur pour dévier et rediriger la lumière sortant de la première optique (20), et/ou
dans laquelle la deuxième optique (30) est conçue sous la forme d'un corps plein, et/ou dans laquelle la deuxième optique (30) est conçue pour rediriger la lumière par réflexion ou réflexion totale pour créer une sortie dirigée de lumière à partir de la deuxième optique (30), et/ou
dans laquelle la deuxième optique (30) présente sensiblement une forme tronconique inversée par rapport à la forme de la première optique (20) et dont la zone de sortie de lumière (32) plane est située au niveau de son côté éloigné de la première optique (20), laquelle zone de sortie de lumière converge vers la première optique (20), pour former une zone frontale (33) plane, ladite zone frontale (33) présentant de préférence l'ouverture (31) qui reçoit au moins en partie la première optique (20), et/ou
dans laquelle la deuxième optique (30) présente une zone d'injection de lumière (310) délimitant l'ouverture (31) et par le biais de laquelle la lumière sortant de la première optique (20) est injectée dans la deuxième optique (30), ladite zone d'injection de lumière (310) convergeant de préférence vers la zone de sortie de lumière (32) ou étant cylindrique, l'ouverture (31) étant de préférence conçue de manière continue dans la deuxième optique (30).

7. Optique d'éclairage (10) selon l'une des revendications précédentes, dans laquelle l'ouverture (31) ou la zone d'injection de lumière (310) délimitant ladite ouverture (31) de la deuxième optique (30), vue dans la direction de l'axe optique (R, R2), est plus grande qu'une zone de sortie (25) de la première optique (20) et notamment qu'un faisceau de rayons lumineux (S1) sortant de la première optique (20) et venant frapper la zone d'injection de lumière (310), de préférence au moins une fois et demi plus grande et tout préférablement au moins deux fois plus grande.

8. Optique d'éclairage (10) selon l'une des revendications précédentes, dans laquelle la surface de déflexion (36) est une surface délimitant latéralement la deuxième optique (30) par rapport à l'axe optique (R, R2) pour influencer optiquement la lumière injectée dans la deuxième optique (30) et notamment pour la dévier vers la zone de sortie de lumière (32).

9. Optique d'éclairage (10) selon l'une des revendications précédentes, dans laquelle l'ouverture (31), notamment sa zone d'injection de lumière (310), vue dans la direction de l'axe optique (R, R2), ne présente pas de convergence constante, en étant par exemple de forme parabolique ou discontinue, et/ou dans laquelle la surface de déflexion (36), vue dans la direction de l'axe optique (R, R2), ne présente pas un élargissement constant, celui-ci étant par exemple parabolique ou discontinu.

10. Optique d'éclairage (10) selon l'une des revendications précédentes, dans laquelle la zone de sortie de lumière (32) constitue simultanément la surface de sortie de l'optique d'éclairage (10), et/ou
dans laquelle la zone de sortie de lumière (32) s'étend au moins en partie dans un plan, de préférence perpendiculairement à l'axe optique (R, R2), et/ou dans laquelle la zone de sortie de lumière (32) est inclinée au moins en partie par rapport audit plan et/ou dans laquelle la zone de sortie de lumière (32) converge au moins en partie de manière continue ou discontinue vers l'axe optique (R, R2) et de préférence également vers la première optique (20), et/ou
dans laquelle la zone d'émission de lumière (32) de la deuxième optique (30) présente un évidement (34), de préférence un évidement central (34), qui est notamment prévu de manière particulièrement préférentielle dans une zone (35) non efficace pour la sortie de lumière, ledit évidement (34) étant de préférence formé d'un seul tenant avec l'ouverture (31).

11. Optique d'éclairage (10) selon l'une des revendications précédentes,
dans laquelle l'ouverture (31) ou sa zone d'injection de lumière (310) et/ou la surface de déflexion (36) et/ou la zone d'émission de lumière (32) présentent une surface texturée et/ou profilée permettant d'influencer la lumière, et/ou
dans laquelle la zone d'injection de lumière (310) et/ou la surface de déflexion (36) et/ou la zone de sortie de lumière (32) présentent des zones d'influence optique différenciée s'interpénétrant de manière continue ou par paliers.

12. Système à optiques d'éclairage (100), présentant au moins deux optiques d'éclairage (10) selon l'une des revendications précédentes, comprenant un premier groupe de premières optiques (20) et un deuxième groupe de deuxièmes optiques (30), ledit groupe de premières optiques (20) et ledit groupe de deuxièmes optiques (30) étant conçus mobiles l'un par rapport à l'autre le long des axes optiques (R, R1, R2) respectifs, pour permettre une modification d'une caractéristique de sortie de lumière dudit système à optiques d'éclairage (100).

13. Système à optiques d'éclairage selon la revendication 12, dans lequel les premières optiques (20) du premier groupe et/ou les deuxièmes optiques (30) du deuxième groupe sont respectivement reliées au moyen d'éléments de liaison (101, 102), lesdits éléments de liaison (101, 102) présentant de préférence des éléments de guidage (103, 104) permettant de déplacer plusieurs éléments de liaison (101, 102) les uns par rapport aux autres, et/ou dans lequel les éléments de liaison (101, 102) sont de préférence conçus d'un seul tenant avec les optiques (20, 30) respectives.

14. Système à optiques d'éclairage (100) selon la revendication 12 ou 13, dans lequel les axes optiques (R) des optiques d'éclairage (10) sont alignés en parallèle.

15. Luminaire (1) présentant une optique d'éclairage (10) selon l'une des revendications 1 à 11 ou un système à optiques d'éclairage (100) selon l'une des revendications 12 à 14, présentant en outre au moins un moyen d'éclairage (2) permettant d'injecter de la lumière dans la ou les premières optiques (20),
ledit moyen d'éclairage étant de préférence prévu à l'écart de la première optique (20), notamment de la zone d'entrée de lumière de la première optique (20), le moyen d'éclairage (2) étant de préférence une LED ou une OLED.
